(19) Europäisches Patentamt

European Patent Office

Office européen des brevets

(11) Veröffentlichungsnummer: **0 314 073 B1**

(12) **EUROPÄISCHE PATENTSCHRIFT**

(45) Veröffentlichungstag der Patentschrift: **15.04.92**

(21) Anmeldenummer: **88117766.1**

(22) Anmeldetag: **25.10.88**

(51) Int. Cl.⁵: **B23H 7/30**, B23H 1/02

(54) Senkerodiermaschine mit einer Einrichtung zum Kompensieren des Elektrodenverschleisses und Verfahren zum Kompensieren des Elektrodenverschleisses.

(30) Priorität: **26.10.87 DE 3736224**

(43) Veröffentlichungstag der Anmeldung:
**03.05.89 Patentblatt  89/18**

(45) Bekanntmachung des Hinweises auf die
Patenterteilung:
**15.04.92 Patentblatt  92/16**

(84) Benannte Vertragsstaaten:
**CH DE FR GB IT LI**

(56) Entgegenhaltungen:
DE-B- 1 565 777
GB-A- 1 574 048
US-A- 3 614 371
US-A- 4 039 779
US-A- 4 188 522

PATENT ABSTRACTS OF JAPAN, unexamined applications, Sektion M, Band 4, Nr. 29,
14 März 1980 THE PATENT OFFICE JAPANE-
SE GOVERNMENT Seite 119 M 2 "Kokai- Nr.
55-5 217 (INOUE)"

(73) Patentinhaber: **AG für industrielle Elektronik
AGIE Losone bei Locarno**

**CH-6616 Losone/Locarno(CH)**

(72) Erfinder: **Morganti, Mario
Via Lunghetti 20
CH-6612 Ascona(CH)**

(74) Vertreter: **EGLI-EUROPEAN PATENT ATTOR-
NEYS
Widenmayerstrasse 5
W-8000 München 22(DE)**

**Beschreibung**

Die Erfindung betrifft eine Senkerodiermaschine gemäß dem Oberbegriff des Anspruches 1, die das Kompensieren des Elektrodenverschleißes ermöglicht, sowie ein verfahren zum Kompensieren des Elektrodenverschleißes für eine derartige Senkerodiermaschine.

Senkerodiermaschinen weisen eine Erosionselektrode auf, mittels der von einem Werkstück, das in einem geringen Abstand zu der Elektrode angeordnet ist und mit diesem durch ein Dielektrikum in elektrischer Verbindung steht, durch Funkenerosion ein Materialabtrag von dem Werkstück bewirkt wird. Während der Erosionsbearbeitung tritt jedoch nicht nur ein Materialabtrag von dem zu bearbeitenden Werkstück auf, sondern auch ein Materialverlust an der Erosionselektrode, wodurch sich die Erosionselektrode im Laufe der Erosionsbearbeitung ständig verkürzt. Zwar wird die Elektrode bei üblichen Senkerodiermaschinen durch eine Vorschubeinrichtung relativ zu dem zu bearbeitenden Werkstück auf dieses hin bewegt, jedoch wird die Vorschubeinrichtung nur mit einer dem Materialabtrag an dem Werkstück entsprechenden Geschwindigkeit auf dieses zu bewegt, die dem Elektrodenverschleiß nicht Rechnung trägt. Die durch den Elektrodenverschleiß bedingte Verkürzung führt somit zu dem Problem bei der Vorschubsteuerung, daß die Spitze der Erosionselektrode nicht weit genug auf das zu bearbeitende Werkstück hingeführt wird, so daß die Bearbeitungstiefe unter der Solltiefe zurückbleibt.

Bei Funkenerosionsmaschinen oder Senkerodiermaschinen der einfachsten Bauart muß von Zeit zu Zeit durch eine Handverstellung der Elektrode der Elektrodenverschleiß kompensiert werden. Dies geschieht bei derartigen einfachsten Senkerodiermaschinen durch ein Handnachstellen der Erosionselektrode, bis diese wieder den vorbestimmten Abstand von einer Referenzfläche oder einem zu bearbeitenden Werkstück aufweist. Zum Nachstellen der Elektrode bzw. zur Kompensation des Elektrodenverschleißes muß die Senkerodiermaschine außer Betrieb gesetzt werden. Die unerwünschten Stillstandszeiten, die aufgrund der nötigen Handkompensation erforderlich sind, führen ebenso zu nicht unerheblichen Kosten wie die Notwendigkeit von qualifiziertem Personal für die Durchführung der Kompensation des Elektrodenverschleißes.

Es haben sich daher seit einiger Zeit Senkerodiermaschinen oder Funkenerosionsmaschinen durchgesetzt, die einerseits eine Vorschubeinrichtung aufweisen, die gegenüber einem feststehenden Maschinenrahmen zum Führen einer Erodierelektrode gegen ein Werkstück verfahrbar angeordnet ist und die eine erste Spannvorrichtung zum Einspannen der Elektrode aufweisen und die ferner eine Kompensationseinrichtung zum Nachführen der Elektrode gegenüber der Spannvorrichtung zum Kompensieren eines Elektrodenverschleißes haben.

Eine derartige Senkerodiermaschine mit einer Einrichtung zum Kompensieren des Elektrodenverschleißes ist beispielsweise aus der US-PS 41 88 522 bekannt. Zum Kompensieren des Elektrodenverschleißes wird bei dieser bekannten Senkerodiermaschine zunächst die auf der Vorschubeinrichtung angeordnete Spannvorrichtung geöffnet, sodann ein eine Referenzebene bildendes Anschlagteil in einen der verschlissenen Elektrode gegenüberliegenden Bereich eingeschwenkt, woraufhin mit einer getrennten automatischen Nachführvorrichtung die Elektrode gegenüber der geöffneten Spannvorrichtung in Richtung auf das Anschlagteil zugeführt wird, bis die Elektrode fest gegen den Anschlag anliegt. In diesem Zustand wird die Nachführvorrichtung abgeschaltet und die Spannvorrichtung geschlossen. Nach Wegschwenken des Anschlagteiles kann die Erosionsbetriebsweise wiederum aufgenommen werden. Für eine Durchführung der Kompensation bedarf es also einer Vorschubeinrichtung mit einer Spannvorrichtung, die steuerbar geöffnet und geschlossen werden kann, sowie zusätzlich einer Nachführvorrichtung, die in dem geöffneten Zustand der Spannvorrichtung die Elektrode bis gegen den Anschlag, der getrennt in den Bereich vor der Elektrode eingeschwenkt werden muß, führt.

Aus der DE-AS 15 65 777 ist eine Senkerodiermaschine bekannt, die gleichfalls mit einer Vorschubeinrichtung ausgestattet ist, die eine Spannvorrichtung zum Festklemmen der Erodierelektrode während der Bearbeitung des Werkstückes aufweist.

Zum Kompensieren des Elektrodenverschleißes wird die Elektrode bei geöffneter Spannvorrichtung durch eine getrennte Elektrodennachführvorrichtung soweit in Richtung auf das Werkstück vorgeschoben, bis ein an die Elektrode angelegter und auf eine vorgegebene Hochspannung aufgeladener Kondensator über die Elektrode und den Arbeitsspalt zum Werkstück entladen wird, wodurch das Einhalten eines vorbestimmten Mindestabstandes zwischen der Elektrode und dem Werkstück erfaßt wird. Bei Auftreten der Kondensatorentladung wird die Nachschubvorrichtung abgeschaltet und die Spannvorrichtung gespannt. Da das Nachführen der Elektrode bei der Kompensation des Elektrodenverschleißes mit hoher Genauigkeit erfolgen muß, bedarf es einer Vorrichtung zum Nachführen der Elektrode zur Kompensation des Elektrodenverschleißes, die ebenfalls hohen Genauigkeitsanforderungen gerecht werden muß.

Zum allgemeinen Stand der Technik, der von der Anmelderin als technologischer Hintergrund der vorliegenden Patentanmeldung angesehen wird, wird ergänzend auf folgende Druckschriften verwiesen:
DE-AS 26 43 103;
JP-OS 55-5217/B 23 P 1-02;
JP-OS 61 249 225 sowie
US-PS 40 39 779.

In der US-A-36 14 371 ist eine Funkenerosionsmaschine zur Herstellung kleiner Löcher beschrieben, die eine Vorschubvorrichtung für die Elektrode aufweist, die ermöglicht, den Elektrodenverschleiß auszugleichen. Die Vorschubvorrichtung umfaßt eine erste Spannvorrichtung, die am Maschinenrahmen senkrecht verschiebbar angebracht ist und eine Ausnehmung aufweist. Diese erste Spannvorrichtung besitzt zwei mit Abstand voneinander in gegenüberliegenden Bereichen der Ausnehmung angeordnete Spanneinrichtungen. Innerhalb der Ausnehmung der ersten Spannvorrichtung ist eine zweite Spannvorrichtung mit ebenfalls zwei Spanneinrichtungen verschiebbar angeordnet. Alle vier Spanneinrichtungen sind übereinander angeordnet und zueinander ausgerichtet, wobei die Elektrode durch die vier Spanneinrichtungen hindurchgeführt ist. Zur Zufuhr der Elektrode in Richtung zu dem Werkstück während eine Bearbeitungsvorganges wird die gesamte Vorschubvorrichtung bewegt. Zur Kompensation des Elektrodenverschleißes wird die zweite Spannvorrichtung bei geöffneten Spanneinrichtungen nach oben bis zum Anschlag gegen die erste Spannvorrichtung bewegt. Dabei ist die Elektrode durch die Spanneinrichtungen der ersten Spannvorrichtung festgehalten. Die Spanneinrichtungen der zweiten Spannvorrichtung spannen nun die Elektrode ein und die Spanneinrichtungen der ersten Spannvorrichtung geben diese frei. Daraufhin bewegt sich die zweite Spannvorrichtung bis zum Anschlag gegen die erste Spannvorrichtung nach unten, wobei sie die Elektrode um eine entsprechende Strecke nach unten bewegt. Nun wird die Elektrode von den Spanneinrichtungen der ersten Spannvorrichtung erfaßt und denjenigen der zweiten Spannvorrichtung freigegeben. Die zweite Spannvorrichtung bewegt sich nach oben und schließt damit einen Bewegungszyklus ab. Die Bewegungsstrecke der zweiten Spannvorrichtung ist durch die Abmessungen der Ausnehmung in der ersten Spannvorrichtung festgelegt. Damit ist auch das Maß der Elektrodenzufuhr zur Kompensation unveränderbar. Damit ist aber auch der Arbeitseinsatz festgelegt und eingeschränkt. Außerdem ist diese Erosionsmaschine mit der Vielzahl von Spanneinrichtungen aufwendig konstruiert.

Gegenüber diesem Stand der Technik liegt der vorliegenden Erfindung die Aufgabe zugrunde, eine Senkerodiermaschine der eingangs genannten Art so weiter zu bilden, daß bei vereinfachtem Aufbau der Senkerodiermaschine eine hohe Genauigkeit der Kompensation des Elektrodenverschleißes erzielbar ist.

Diese Aufgabe wird bei einer Senkerodiermaschine nach dem Oberbegriff des Anspruches 1 durch die im kennzeichnenden Teil des Anspruchs 1 angegebenen Merkmale gelöst.

Der vorliegenden Erfindung liegt die Erkenntnis zugrunde, daß eine jede Senkerodiermaschine über eine hochgenau arbeitende Vorschubeinrichtung verfügt, die normalerweise zum Führen der Erodierelektrode gegen das Werkstück dient, und daß diese Vorschubeinrichtung auch zum Durchführen der Kompensation des Elektrodenverschleißes herangezogen werden kann. Zu diesem Zwecke weist die Kompensationsvorrichtung eine zweite Spannvorrichtung zum Einspannen der Elektrode auf, die gegenüber dem Maschinenrahmen ortsfest angeordnet ist. Unter "ortsfest" wird hier verstanden, daß die zweite Spannvorrichtung während der Arbeitsschritte zum kompensieren des Elektrodenverschleißes gegenüber dem Maschinenrahmen nicht bewegt wird. Gleichwohl kann die zweite Spannvorrichtung bei Arbeits- oder Elektrodenwechsel neu justiert werden, d. h. in Bezug auf den Maschinenrahmen verstellt werden. Eine Steuervorrichtung bewirkt die Kompensation dadurch, daß bei gespannter erster Spannvorrichtung und bei geöffneter zweiter Spannvorrichtung die Elektrode bis zu ihrer Anlage gegen eine Referenzfläche verfahren wird, woraufhin die zweite Spannvorrichtung geschlossen und die erste Spannvorrichtung geöffnet wird, um im Anschluß hieran die Vorschubeinrichtung bis zu einer Bezugslage zurückzufahren, in der die Steuervorrichtung die erste Spannvor richtung zum Spannen und wiederum die zweite, ortsfeste Spannvorrichtung zum Öffnen veranlaßt. Somit wird durch die erfindungsgemäße Senkerodiermaschine die für die normale Bearbeitung benötigte, hochgenau arbeitende Vorschubeinrichtung durch einfache Ergänzung mit einer zweiten, feststehenden Spannvorrichtung auch für das Kompensieren des Elektrodenverschleißes eingesetzt.

Eine vorteilhafte Ausgestaltung der Erfindung ist im Anspruch 2 angegeben. Die Steuereinrichtung führt eine elektrische Überwachung durch, ob die Elektrode gegen die Referenzfläche anliegt oder ob sie eine vorbestimmte Lage gegenüber der Referenzfläche erreicht hat, wodurch die bei einer mechanischen Lageerfassung durch Anlegen einer Elektrode gegen eine Anschlagfläche auftretenden Kräfte und somit die Deformation der Elektrode vermieden werden. Ebenfalls wird ausgeschlossen, daß sich die Referenzfläche durch mechanische Kräfte, die durch die Elektrode auf die Referenzfläche ausgeübt werden, verschoben wird.

Entsprechend der in Anspruch 3 beanspruchten Ausgestaltung kann eine derartige elektrische Überwachung der relativen Lage der Elektrode zur Referenzfläche mittels einfacher und marktüblicher elektrischer Erfassungsschaltungen durch Überwachung eines Spannungsabfalls oder durch Widerstandsmessung erfolgen. Hierdurch wird es möglich, die Elektrode exakt in die Soll-Position zu bringen, in der die Elektrode gerade das Werkstück berührt oder gerade die gewünschte vorbestimmte Lage gegenüber einer Referenzfläche einnimmt, ohne daß es einer visuellen Kontrolle durch eine Bedienungsperson bedarf. Da ohnehin für das Erodieren das Anlegen einer Spannung zwischen Elektrode und Werkstück erforderlich ist, ist der schaltungstechnische Aufwand für diese Maßnahme sowohl im Fall der Spannungsmessung als auch im Fall der Widerstandsmessung sehr gering.

Die Anwendung des Gegenstandes der vorhergehenden Ansprüche bei einer Senkerodiermaschine mit mehreren Elektroden ist Gegenstand der Unteransprüche 4 und 5. Bei Mehrelektrodenmaschinen ist also jeder Vorschubeinrichtung mit jeweils einer ersten Spannvorrichtung eine zweite Spannvorrichtung zugeordnet, wodurch eine Unabhängigkeit der Kompensationsvorgänge für jede einzelne Elektrode erreicht wird.

In vorteilhafter Weise erfolgt die Kompensationssteuerung durch die Steuereinrichtung gemäß den in Anspruch 5 festgelegten Ausgestaltungen durch unabhängige Elektrodenverschleißkompensation und zeitliche Versetzung des Kopensationsvorganges für die jeweiligen Elektroden.

Das Arbeitsverfahren zum Kompensieren des Elektrodenverschleißes bei einer erfindungsgemäßen Senkerodiermaschine ist im Anspruch 6 angegeben. Im Hinblick auf die mit dem Verfahren erzielbaren Vorteile kann auf die diesbezüglichen Angaben zu den Gegenstandsansprüchen verwiesen werden.

Der Erfindungsgegenstand wird im folgenden anhand von Ausführungsbeispielen unter Bezugnahme auf die Zeichnungen näher erläutert. Es zeigen:

Fig. 1 - 7   schematische Darstellungen einer Senkerodiermaschine gemäß der vorliegenden Erfindung in verschiedenen Zuständen während des Arbeits- und des Kompensationsablaufes; und

Fig. 8   eine Ansicht einer Senkerodiermaschine mit zwei Elektroden und zwei zugeordneten Kompensationseinrichtungen zum Kompensieren des jeweiligen Elektrodenverschleißes.

In Fig. I bezeichnet das Bezugszeichen 1 eine Senkerodiermaschine in ihrer Gesamtheit. Die Senkerordiermaschine hat einen Maschinenrahmen 2, an dem eine Elektroden-Vorschubeinrichtung 3 in Richtung eines Vektors z verfahrbar angeordnet ist. Die Vorschubeinrichtung 3 trägt eine erste Spannvorrichtung 4, mittels der eine Elektrode 5 einspannbar ist. Am Maschinenrahmen 2 ist eine zweite Spannvorrichtung 6 angebracht, durch die die Elektrode 5 geführt wird und mittels der die Elektrode 5 gleichfalls einspannbar ist.

Die Vorschubeinrichtung 3, die allgemein als Pinole bezeichnet wird, kann mittels einer nicht dargestellten Antriebseinrichtung in Richtung auf ein Werkstück 9 hin und von diesem weg bewegt werden.

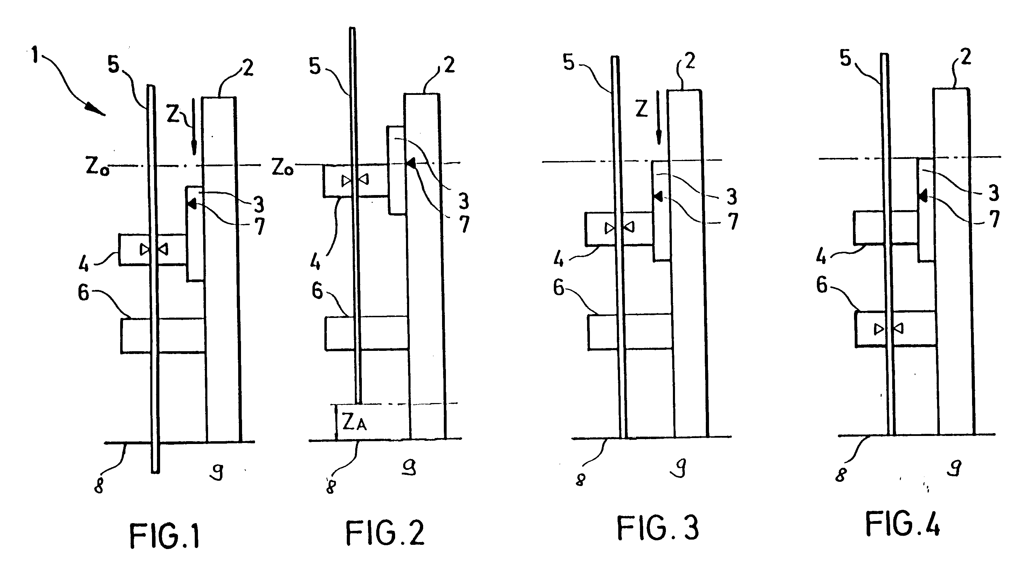

In den Figuren 1 bis 7 ist jeweils diejenige Spannvorrichtung 4, 6, die die Elektrode 5 einspannt, durch einen an der Einspannstelle angedeuteten Doppelpfeil gekennzeichnet.

Fig. 1 zeigt die Senkerodiermaschine I in ihrem normalen Betriebszustand, in dem die zusammen mit der Vorschubeinrichtung 3 bewegliche erste Spannvorrichtung 4 die Elektrode 5 eingespannt hält, während die zweite Spannvorrichtung 6 geöffnet und damit ohne Einfluß auf die Elektrodenverschiebung ist. Die Arbeitstiefe der Elektrode 5 im Werkstück 9 während des Senkerodierens wird bei unverschlissener Elektrode 5 allein durch die Lage der Vorschubeinrichtung 3 in Richtung des Vektors z festgelegt, wobei die Arbeitstiefe durch den Versatz einer Marke 7 der Vorschubeinrichtung 3 gegenüber einer Bezugslage $Z_0$ angedeutet wird. Mit zunehmendem Elektrodenverschleiß nimmt jedoch die tatsächlich erreichte Arbeîtstiefe durch Verkürzung der Elektrode 5 ab.

Bevor nachfolgend auf die Fig. 2 bis 7 eingegangen wird, sei angemerkt, daß in den Fig. 2 bis 7 Bezugszeichen, die mit den Bezugszeichen der Fig. 1 übereinstimmen, gleiche Teile bezeichnen.

Daher kann eine nochmalige Beschreibung dieser Teile unter Bezugnahme auf die Fig. 2 bis 7 entfallen.

In der in Fig. 2 dargestellten Lage der Vorschubeinrichtung 3 befindet sich diese mit ihrer Marke 7 auf der Höhe der Bezugslage $Z_0$. In dieser 0-Lage der Vorschubeinrichtung 3 ist der Elektrodenverschleiß $Z_A$ als Abstand der verschlissenen Elektrodenspitze gegenüber dem Werkstück9oder einer Referenzebene 8 zu erkennen. Aufgrund dieses Elektrodenverschleißabstandes $Z_A$ erreicht bei einer entsprechenden Vorschubbewegung durch die Vorschubeinrichtung 3 die Elektrode 5 auch nicht die gewünschte Senktiefe, sondern nur eine um den Elektrodenverschleißabstand $Z_A$ verminderte Senktiefe.

Das Durchführen der Elektrodenverschleißkompensation wird dadurch eingeleitet, daß die Vorschubeinrichtung 3 die Elektrode 5 soweit absenkt, bis die Elektrode 5 eine vorbestimmte Lage bezüglich der Referenzebene 8, vorzugsweise eine Kontaktgabe mit dem gleichzeitig die Referenzebene bildenden Werkstück 9 erfährt. Während dieser Verschiebung bleibt die erste Spannvorrichtung 4 ständig gespannt, während die zweite Spannvorrichtung 6 ständig unbetätigt oder geöffnet bleibt.

Während des Annäherns der Elektrode 5 gegen das Werkstück 9 bis zu dem in Fig. 3 gezeigten Endzustand wird zwischen der Elektrode 5 und dem Werkstück 9 eine Prüfspannung angelegt, deren schlagartiges Absinken eine Kontaktgabe zwischen der Elektrodenspitze 5 und dem Werkstück 9 darstellt. Aus diesem Absinken der Prüfspannung erzeugt eine (nicht dargestellte) Steuereinrichtung ein Signal, das zum sofortigen Beenden der Vorschubbewegung der Vorschubeinrichtung 3 führt.

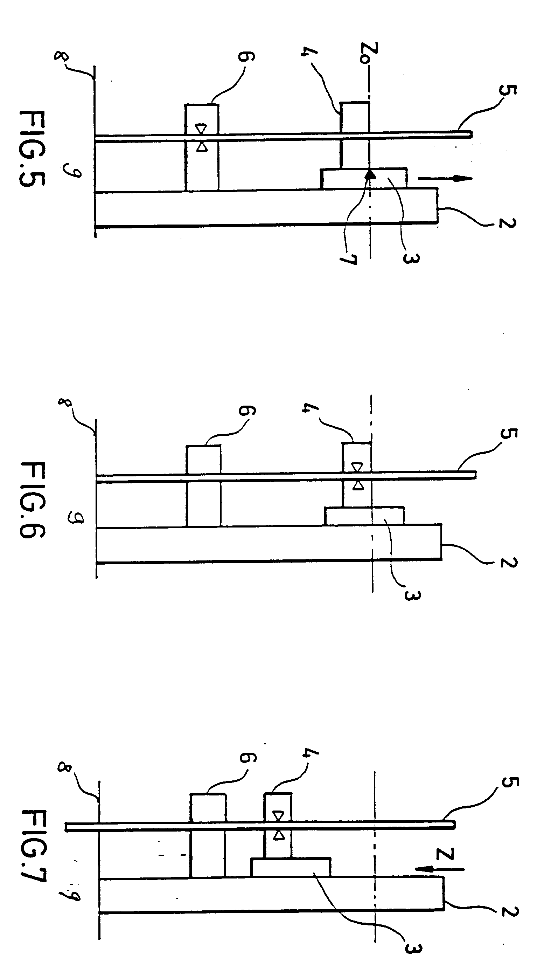

Bei dem in Fig. 4 schematisch dargestellten nächsten Arbeitsschritt der erfindungsgemäßen Senkerodiermaschine wird zunächst die zweite, ortsfeste Spannvorrichtung 6 gespannt, um die Elektrode 5 in dieser Lage festzulegen, während die erste Spannvorrichtung 4 geöffnet wird. Nunmehr wird die Vorschubeinrichtung 3 in ihre 0-Lage, in der die Marke 7 mit der Bezugslage $Z_0$ übereinstimmt, zurückgefahren, wie dies in Fig. 5 ersichtlich ist.

Anschließend wird, wie in Fig. 6 gezeigt ist, zunächst die erste Spannvorrichtung erneut eingespannt, woraufhin die zweite Spannvorrichtung 6 geöffnet wird. Nun ist die Kompensation des Elektrodenverschleißes durch Nachführen der Elektrode in eine 0-Lage beendet.

In einem anschließenden Arbeitsschritt, der in Fig. 7 angedeutet ist, kann nun die Elektrode 5 durch Verschieben der Vorschubeinrichtung 3 bei ständig angespannter erster Spannvorrichtung 4 bis auf die gewünschte Senktiefe abgesenkt werden.

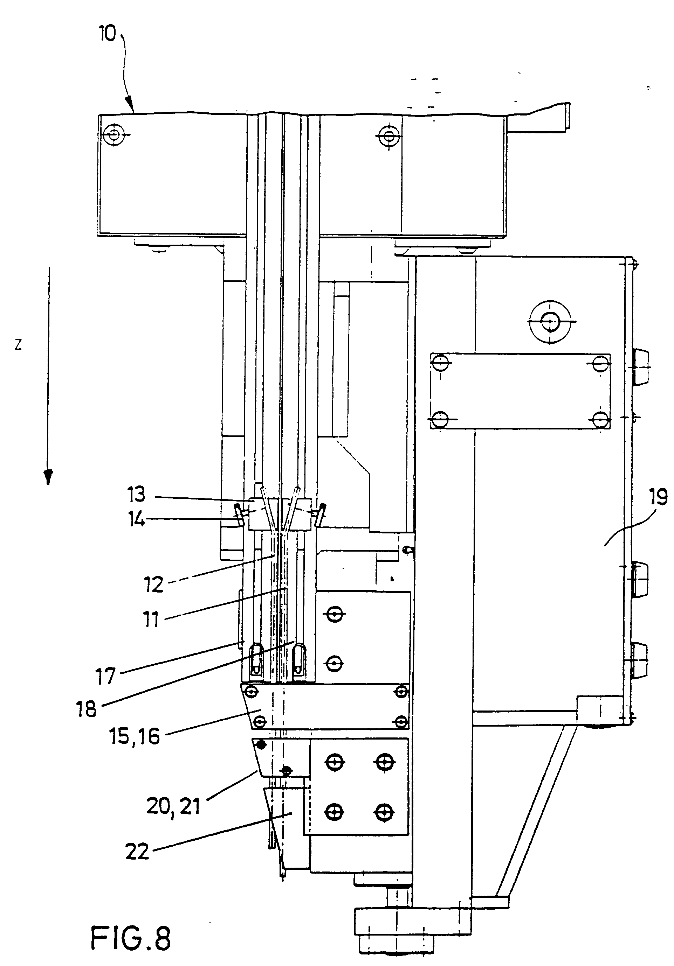

In Fig. 8 ist eine Ansicht einer Mehrelektroden-Erodiermaschine dargestellt, die in der gezeigten Ausführungsform mit zwei Elektroden 11, 12 ausgestattet ist.

Jeder dieser Elektroden 11, 12 ist eine eigene Vorschubund Kompensationseinrichtung zugeordnet, wie nachfolgend näher erläutert werden soll.

Die Elektroden 11, 12 werden über einen Elektrodenhalter 13 in die Erodiermaschine eingeführt und mittels einer Klemmvorrichtung 14 gehalten. Eine erste und eine zweite obere Spannvorrichtung 15, 16 die mit den Vorschubeinrichtungen 17, 18 gemeinsam in der Z-Richtung verfahrbar sind, werden gegenüber dem Maschinenrahmen 19 beweglich geführt. Zwei weitere Spannvorrichtungen 20, 21 sind gegenüber dem Maschinenrahmen 19 ortsfest angeordnet.

Beide Elektroden 11, 12 werden in einem dem Werkstück zugewandten Endabschnitt der Mehrelektroden-Erodiermaschine 10 über eine Führung 22 geführt.

Die Betriebsweise der in Fig. 8 dargestellten Mehrelektroden-Erodiermaschine 10 entspricht für jede einzelne Elektrode 11, 12 derjenigen, der in Zusammenhang mit Fig. 1 bereits erläuterten Betriebsweise. Jedoch bewirkt die Steuereinrichtung für eine Kompensation des jeweiligen Elektrodenverschleißes eine unabhängige und zeitlich versetzte Ansteuerung der Vorschubeinrichtungen und Spannvorrichtungen.

**Patentansprüche**

1. Senkerodiermaschine
   mit einer Vorschubeinrichtung,
   - die gegenüber einem feststehenden Maschinenrahmen (2) zum Führen einer Erodierelektrode (5) gegen ein Werkstück (9) verfahrbar ist und
   - die eine erste Spannvorrichtung (4) zum Einspannen der Elektrode (5) und eine Kompensationseinrichtung zum Nachführen der Elektrode (5) gegenüber der ersten Spannvorrichtung (4) zum Kompensieren eines Elektrodenverschleißes aufweist,
   dadurch gekennzeichnet,
   - daß die Kompensationsvorrichtung eine zweite Spannvorrichtung (6) zum Einspannen der Elektrode (5) aufweist, die gegenüber dem Maschinenrahmen (2) ortsfest angeordnet ist, und
   - daß eine Steuereinrichtung vorgesehen ist, durch die die Vorschubeinrichtung (3) bei gespannter erster Spannvorrichtung (4) und bei geöffneter zweiter Spannvorrichtung (6) zum Verfahren der Elektrode (5) bis zu ihrer Anlage gegen eine Referenzfläche (8) oder bis zu einer vorbestimmten Lage bezüglich der Referenzfläche (8) ansteuerbar ist, daß durch die Steuereinrichtung in dieser Lage der Vorschubeinrichtung (3) die zweite Spannvorrichtung (6) in den gespannten Zustand und die erste Spannvorrichtung (4) in den geöffneten Zustand steuerbar ist, und daß die Vorschubeinrichtung (3) bei geöffneter erster Spannvorrichtung (4) zum Verfahren von dem Werkstück (2) fort in eine Bezugslage ($Z_0$) steuerbar ist, wobei bei sich in der Bezugslage ($Z_0$) befindender Vorschubeinrichtung (3) die erste Spannvorrichtung (4) in den gespannten und die zweite Spannvorrichtung (6) in den geöffneten Zustand steuerbar ist.

2. Senkerodiermaschine nach Anspruch 1
   dadurch gekennzeichnet,

daß die Steuereinrichtung elektrische Mittel umfaßt, mit denen während des Verfahrens der Elektrode (5) in Richtung zu der Referenzfläche (8) ein Anliegen der Elektrode (5) gegen die Referenzfläche (8) oder das Erreichen der vorbestimmten Lage bezüglich der Referenzfläche (8) durch die Elektrode (5) erfaßbar ist, und daß bei erfaßtem Anliegen der Elektrode (5) gegen die Referenzfläche (8) oder erfaßtem Erreichen der vorbestimmten Lage der Elektrode (5) das Verfahren der Vorschubeinrichtung (3) durch die Steuereinrichtung unterbrechbar ist.

3. Senkerodiermaschine nach Anspruch 2, dadurch gekennzeichnet, daß die elektrischen Mittel von einer an die Elektrode (5) über einen Vorwiderstand angelegten Prüfspannung, die durch die Steuereinrichtung auf Spannungsabfall überprüfbar ist, oder von dem Widerstand zwischen der Elektrode (5) und der Referenzfläche (8) gebildet sind, dessen Widerstandswert durch die Steuereinrichtung im Hinblick auf eine Verringerung überprüfbar ist.

4. Senkerodiermaschine nach einem der Ansprüche 1 bis 3, dadurch gekennzeichnet, daß mehrere Elektroden (11, 12) vorgesehen sind, denen jeweils eine Vorschubeinrichtung (17, 18) mit jeweils einer ersten Spannvorrichtung (15, 16) sowie jeweils eine zweite, ortsfeste Spannvorrichtung (20, 21) zugeordnet ist.

5. Senkerodiermaschine nach Anspruch 4, dadurch gekennzeichnet, daß zum Kompensieren des jeweiligen Elektrodenverschleißes die jeweiligen Vorschubeinrichtungen (17, 18) und die ersten und die zweiten Spannvorrichtungen (15, 16, 20, 21) für jede Elektrode (11, 12) unabhängig und zeitlich versetzt bezüglich der Ansteuerung für die anderen Elektroden durch die Steuereinrichtung ansteuerbar sind.

6. Verfahren zum Kompensieren des Elektrodenverschleißes bei einer Senkerodiermaschine nach einem der Ansprüche 1 bis 5, wobei die folgenden Verfahrensschritte durchgeführt werden:

A) Rückfahren der Vorschubeinrichtung (3) aus einer momentanen Arbeitsstellung in eine Bezugslage ($Z_0$) bei gespannter erster Spannvorrichtung (4) und geöffneter zweiter Spannvorrichtung (6),

B) Anordnen einer Referenzfläche (8) in dem durch die Vorschubeinrichtung (3) festgelegten Bewegungsbereich der Elektrode (5), die eine Bezugsebene für eine spätere Senkerodierbearbeitung definiert;

C) Vorfahren der Vorschubeinrichtung (3) bei gespannter erster Spannvorrichtung (4) und bei geöffneter zweiter Spannvorrichtung (6) bis zur Anlage der Elektrode (5) gegen die Referenzfläche (8);

D) Spannen der zweiten Spannvorrichtung (6) ;

E) Öffnen der ersten Spannvorrichtung (4) ;

F) Rückführen der Vorschubeinrichtung (3) in die Bezugslage ($Z_0$) ;

G) Spannen der ersten Spannvorrichtung (4) und

H) Öffnen der zweiten Spannvorrichtung (6).

## Claims

1. Erosion machine
having a feed device,

- which is traversable with respect to a stationary machine frame (2) for guiding an erosion electrode (5) towards a workpiece (9), and
- which has a first clamping device (4) for clamping the electrode (5) and a compensation device for adjusting the electrode (5) with respect to the first clamping device (4) for compensating wear in the electrode,
characterized
- in that the compensation device has a second clamping device (6) for clamping the electrode (5) which is arranged stationary with respect to the machine frame (2), and
- in that a control device is provided by means of which the feed device (3) may be triggered, when the first clamping device (4) is clamped and when the second clamping device (6) is open, for traversing of the electrode (5) until it bears against a reference surface (8) or until it reaches a predetermined position with respect to the reference surface (8), in that, by means of the control device, in this position of the feed device (3) the second clamping device (6) may be brought into the clamped state and the first clamping device (4) may be brought into the open state, and in that the feed device (3), when the first clamping device (4) is open, may be controlled for traversing of the workpiece (2) or into a reference position ($Z_0$, the first clamping device (4) being able to be brought into the clamped state and the second clamping device (6) being able to be brought into the open state when the feed device (3) is located in the reference position ($Z_0$).

2. Erosion machine according to Claim 1, characterized
in that the control device has electrical means by means of which, during traversing of the electrode (5) in the direction of the reference surface (8), a bearing of the electrode (5) against the reference surface (8) or reaching of the predetermined position with respect to the reference surface (8) may be detected by the electrode (5), and in that when bearing of the electrode (5) against the reference surface (8) or reaching of the predetermined position of the electrode (5) is detected, traversing of the feed device (3) may be interrupted by the control device.

3. Erosion machine according to Claim 2, characterized
in that the electrical means are formed from a test voltage which is applied across the electrode (5) by way of an upstream resistor and which may be checked for voltage drop by the control device, or from the resistance between the electrode (5) and the reference surface (8), the resistance value of which may be checked by the control device with respect to a reduction.

4. Erosion machine according to one of Claims 1 to 3, characterized
in that a plurality of electrodes (11, 12) are provided, with which a respective feed device (17, 18) with a respective first clamping device (15, 16) and a respective second, stationary clamping device (20, 21) is associated.

5. Erosion machine according to Claim 4, characterized
in that for compensating the respective electrode wear the respective feed devices (17, 18) and the first and the second clamping devices (15, 16, 20, 21) for each electrode (11, 12) may be triggered by the control device independently and chronologically staggered with respect to the triggering for the other electrodes.

6. Process for compensating the electrode wear in an erosion machine according to one of Claims 1 to 5, in which the following process steps are carried out:
A) moving back the feed device (3) from a momentary operating position into a reference position ($Z_0$) when the first clamping device (4) is clamped and the second clamping device (6) is open,
B) arranging a reference surface (8) in the movement region of the electrode (5) established by the feed device (3), which reference surface (8) defines a reference plane for a later erosion machining procedure;
C) moving forward the feed device (3), when the first clamping device (4) is clamped and when the second clamping device (6) is open, until the electrode (5) bears against the reference surface (8);
D) clamping of the second clamping device (6);
E) opening of the first clamping device (4);
F) moving back the feed device (3) into the reference position ($Z_0$);
G) clamping of the first clamping device (4), and
H) opening of the first clamping device (6).

**Revendications**

1. Machine à éroder à mouvement descendant dotée d'un dispositif d'avance:
- qui peut être déplacé vis-à-vis d'un bâti fixe de machine (2) pour acheminer une électrode à éroder (5) contre une pièce (9) et
- qui comporte un premier dispositif de blocage (4) pour fixer l'électrode (5) et un dispositif de compensation pour repousser l'électrode (5) face au premier dispositif de blocage (4) afin de compenser l'usure de l'électrode, caractérisée en ce que:
- le dispositif de compensation présente un second dispositif de blocage (6) pour fixer l'électrode (5), qui est agencé fixe vis-à-vis du bâti (2) de la machine, et - il est prévu un dispositif de commande par lequel le dispositif d'avance (3) peut être commandé, lorsque le premier dispositif de blocage (4) est serré et que le second dispositif de blocage (6) est ouvert pour déplacer l'électrode (5) jusque dans sa position d'appui contre une surface de référence (8) ou jusque dans une position prédéterminée par rapport à la surface de référence (8), en ce que, dans cette position du dispositif d'avance (3), le dispositif de commande peut entraîner le second dispositif de blocage (6) en position de serrage et le premier dispositif de blocage (4) en position d'ouverture, et en ce que le dispositif d'avance (3) peut être commandé, lorsque le premier dispositif de blocage (4) est ouvert, pour déplacer la pièce (2) plus loin dans une position de référence ($Z_0$), où, lorsque le dispositif d'avance (3) se trouve dans la position de référence ($Z_0$), le premier dispositif de blocage (4) peut être entraîné en position de serrage et le second dispositif de blocage (6) en position d'ouverture.

2. Machine à éroder à mouvement descendant selon la revendication 1, caractérisée en ce que le dispositif de commande comprend des moyens électriques par lesquels, au cours du déplacement de l'électrode (5) en direction de la surface de référence (8), l'électrode (5) peut venir s'appuyer contre la surface de référence (8) ou atteindre la position prédéterminée par rapport à la surface de référence (8) et en ce que, une fois que l'électrode (5) s'appuie contre la surface de référence (8) ou une fois qu'elle a atteint sa position prédéterminée par rapport à la surface de référence (8)), le déplacement du dispositif d'avance (3) par le dispositif de commande peut être interrompu.

3. Machine à éroder à mouvement descendant selon la revendication 2, caractérisée en ce que les moyens électriques sont formés d'une tension d'essai appliquée à l'électrode (5) via une pré-résistance dont la chute de tension peut être contrôlée par le dispositif de commande, ou de la résistance entre l'électrode (5) et la surface de référence (8) dont une réduction de la valeur de résistance peut être contrôlée par le dispositif de commande.

4. Machine à éroder à mouvement descendant selon l'une quelconque des revendications 1 à 3, caractérisée en ce qu'il est prévu plusieurs électrodes (11, 12) auxquelles sont affectés respectivement un dispositif d'avance (17, 18) avec respectivement un premier dispositif de blocage (15, 16) et respectivement un second dispositif de blocage fixe (20, 21).

5. Machine à éroder à mouvement descendant selon la revendication 4, caractérisée en ce qu'à chaque fois, pour compenser l'usure de l'électrode, les dispositifs d'avance correspondants (17, 18) et les premier et second dispositifs de blocage (15, 16, 20, 21) de chaque électrode (11, 12) peuvent être commandés par le dispositif de commande indépendamment et de manière décalée dans le temps par rapport à la commande des autres électrodes.

6. Procédé de coompensation de l'usure d'une électrode dans une machine à éroder à mouvement descendant selon l'une quelconque des revendications 1 à 5, dans lequel les étapes suivantes sont réalisées:

A) Recul du dispositif d'avance (3) d'une position de travail momentanée dans une position de référence ($Z_0$) lorsque le premier dispositif de blocage (4) est en position de serrage et que le second dispositif de blocage (6) est en position d'ouverture,

B) Aménagement d'une surface de référence (8) dans la région de déplacement de l'électrode (5) déterminée par le dispositif d'avance (3), laquelle région définit un plan de référence pour une opération ultérieure d'érosion à mouvement descendant;

C) Progression du dispositif d'avance (3), tandis que le premier dispositif de blocage (4) est en position de serrage et que le second dispositif de blocage (6) est en position d'ouverture, jusqu'à ce que l'électrode (5) s'appuie contre la surface de référence (8);

D) Serrage du second dispositif de blocage (6);

E) Ouverture du premier dispositif de blocage (4);

F) Recul du dispositif d'avance (3) dans la position de référence ($Z_0$);

G) Serrage du premier dispositif de blocage (4); et

H) Ouverture du second dispositif de blocage (6).

FIG.1

FIG.2

FIG.3

FIG.4

FIG.5

FIG.6

FIG.7

FIG.8